# EUROPÄISCHE PATENTSCHRIFT

(11) **EP 2 139 937 B1**
(45) Veröffentlichungstag und Bekanntmachung des Hinweises auf die Patenterteilung: **04.07.2012**
(21) Anmeldenummer: 08716668.2
(22) Anmeldetag: 20.03.2008
(51) Int. Cl.: C08G 18/62, C08G 18/79, C09D 175/04, C08K 5/524

(54) **PHOSPHONAT-HALTIGES ZWEIKOMPONENTEN-LACKSYSTEM, DESSEN HERSTELLUNG UND VERWENDUNG**
PHOSPHONATE-CONTAINING TWO-COMPONENT COATING SYSTEM AND THE PRODUCTION AND USE THEREOF
SYSTÈME DE VERNIS À DEUX COMPOSANTS, CONTENANT DU PHOSPHONATE, PRODUCTION ET UTILISATION ASSOCIÉES

(30) Priorität: 23.03.2007 DE 102007014720
(43) Veröffentlichungstag der Anmeldung: 06.01.2010
(73) Patentinhaber: BASF Coatings Japan Ltd., Yokohama-shi Kanagawa 244-0815 (JP); BASF Coatings GmbH, 48165 Münster (DE)
(72) Erfinder: TANIGUCHI, Hitoshi, Yokohama 245-0066 (JP); TSUKAMOTO, Eishi, Yokohama 245-0066 (JP); TAKAGI, Hiroyuki, Yokohama 244-0815 (JP); POPPE, Andreas, 97753 Karlstadt (DE); HOLTSCHULTE, Sabine, 48308 Senden (DE); MELZER, Julia, 48153 Münster (DE); WAGNER, Petra, 48153 Münster (DE); FELDMANN, Björn, 48165 Münster (DE)
(74) Vertreter: Leifert & Steffan
(86) Internationale Anmeldenummer: PCT/EP2008/002291
(87) Internationale Veröffentlichungsnummer: WO 2008/116607

(56) Entgegenhaltungen:
- EP-A- 0 882 748
- DE-A1-102004 060 966
- US-A1- 2006 009 606

## Beschreibung

Aus der deutschen Patentschrift DE 43 44 063 C1 ist bekannt, Phosphonsäure-Funktionalitäten in wässrigen Bindemittelgemischen als Gruppen zur Steigerung der Dispersionsbeständigkeit in Wasser einzusetzen. Es wird beschrieben, zu diesem Zweck Polyurethan-Makromonomere mit freien Phosphonsäuregruppen in einer radikalischen Polymerisation mit ungesättigten Monomeren umzusetzen und anschließend mit weiteren Komponenten zu einer Bindemittel-Dispersion weiter zu verarbeiten. Auf diese Weise erhält man wässrige Bindemittel-Systeme, die freie Phosphonsäuregruppen direkt am Backbone des Bindemittel-Polymers enthalten und so eine anionische Stabilisierung der wässrigen Dispersion des Bindemittels zeigen.

Eine weitere Funktion von Phosphonsäuren oder deren sauren Estern in der Lackchemie wird in der deutschen Offenlegungsschrift DE 10 2004 060 966 A1 beschrieben. Dort werden solche Verbindungen neben anderen phosphorhaltigen Säuren, organischen Säurechloriden und Schwefel- oder Sulfonsäuren zur Stabilisierung der Umsetzung von Isocyanaten mit Hydroxylgruppen-haltigen Polyacrylaten als Additiv eingesetzt. Die Verwendung von Diestern der Phosphonsäure oder der Diphosphonsäure wird dort nicht beschrieben.

Ein anderes Verfahren zur Herstellung einer Beschichtung für die Automobilindustrie, das den Einsatz von Phospohonsäuren oder deren Derivaten umfasst, wird in der deutschen Offenlegungsschrift DE 196 50 478 A1 offenbart. Als Ersatz der üblichen Phosphatierung und/oder' des üblichen kathodisch abgeschiedenen Korrosionsschutzlackes wird hier vorgeschlagen, eine Haftschicht aus Homo- oder Copolymeren von Doppelbindungen enthaltenden Phosphonsäuren oder funktionellen Phosphonsäureestern auf das Metallblech aufzubringen. Dabei können die Polymere der vorgestellten neuen korrosionsinhibierenden Schicht mittels funktioneller Gruppen, die nicht an das Substrat adsorbiert sind, inter-/intramolekular oder zur nächsten Lackschicht vernetzt werden.

US2006/0009606 A1 offenbart eine thermisch härtbare Beschichtungszusammensetzung enthaltend mindestens ein Bindemittel mit isocyanatreaktiven Gruppen sowie mindestens einen Polyisocyanatvemetzer, welcher durch mindestens ein Dlhydrocarbyl-Phosphit blockiert ist. Durch Verwendung dieser Beschichtungszusammensetzung zur Beschichtung von Metallsubstraten wird ein guter Korrosionsschutz erreicht.

EP 0 882 748 A2 offenbart die Kombination eines Katalysators wie belspielsweise Dibutylzinndllaurat, einer Carbon- oder Sulfonsäure, sowie eines Extender-Bestandtells wie zum Beispiel 2,4-Pentandion. Die Kombination kann eingesetzt werden In wärmehärtbaren Beschichtungszusammensetzungen und sorgt dort zum Beispiel für die Verlängerung der Topfzeit.

Nachteilig bei allen bisher bekannten Zweikomponenten-Lacksystemen aus einem Isocyanat-basierten Härter und einem Basissystem Ist das rasche Abreagleren nach der Mischung der beiden Komponenten. Dieser Nachteil tritt verstärkt bei der Industriellen Fahrzeuglacklerung in Erscheinung, die einen gewissen zeitlichen Vorlauf allein schon hinsichtlich der Leitungssysteme und der großtechnischen Prozessführung benötigt. Dadurch wird die Topfzeit (= Verarbeitberkeitsdauer) der fertigen Lackformulierung gerade bei Zweikomponenten-Lacksystemen zu einem wichtigen Faktor. Weiterhin ist die Kompatibilität der Hartorkomponenten gegenüber den BIndemittelkomponenten des Basissystems von besonderer Bedeutung. In diesem Zusammenhang ist bel den bekannten Systemen die Bandbreite der Kompatibilität bisher noch eingeschränkt, so dass es oft zu Unverträglichkeiten zwischen den angesprochenen Komponenten kommen kann und eine genaue Abstimmung erforderlich ist. Zudem sollen gerade solche Zwelkomponentensysteme, die zur Herstellung einer Klariackschicht geeignet sind, ein gutes Eigenscheflsprofil gegenüber Umwelteinflüssen bei gleichzeitiger Härte, einer guten Optik und Kratzbeatändigkeit aufwsisen.

Ziel der Erfindung ist es daher, einen möglichst universellen Zwelkomponenten-Lack bereit zu stellen, welcher sich durch eine gute Topfzeit auszelchnet und gleichzeltig sowohl ein gutes Erscheinungsbild als auch eine ausreichende Härte gewährlelstet. Darüber hinaus ist ein weiteres Ziel der Erfindung, die Topfzelt und die Kompatibilität der gattungsgemäßen 2K-Klarlacke durch die Verwendung neuer Zusätze zu erhöhen.

Überraschenderweise zeigt es sich, dass Zweikomponenten-Leckeysteme, die
als Komponente (a) ein oder mehrere Polyisoeyanate,
als Komponente (b) eine oder mehrere mit Komponente (a) reaktive, oligomere und/oder polymere Verbindungen und
als Komponente (c) ein oder mehrere Phosphonate ausgewählt aus der Gruppe der Phosphonsäurediester und Diphosphonasuredleater enthalten, wobei
   (i) Komponente (b) alle Im Zwelkomponenten-Lacksystem enthaltenen mit Komponente (a) reaktiven, oligomeren und/oder polymeren Verbindungen enthält
   (ii) Komponente (b) höchstens 15 Gew.-% bezogen auf das Gesamtgewicht der Komponente (b) an oligomeren und/oder polymeren Verbindungen enthält, die gegenüber Isocyanat reaktive Aminogruppen tragen, und
   (iii) Komponente (c) in einem Gewichtsanteil von 1 bis 25 Gew.-%, bezogen auf das Gewicht des Komponente (b), enthalten ist.
   in der Verarbeitung ausgezeichnete Topfzeiten und sehr gute optische Eigenschaften des resultierenden Lacks sowie eine sehr gute Mikroindentions-Härte aufweisen.

Als "Zweikompanenten-Lacksystem" ist ein solches zu verstehen, bel welchem die chemische Reaktion, die zur Härtung führt, durch Mischen von zwei Komponenten (einem Stammlack und einem Härter) eingeleitet wird (DIN 55945: 1998-09). In der vorliegenden Erfindung funglert Komponente (a) als Härter und Komponente (b) als Stammlackkomponente, die mit dem Härter zur Reaktion gebracht wird. Da die vorliegende Komponente (c) als Katalysator und/oder als Reaktionspartner Im erfindungsgemäßen Zwelkomponerden-Leckstem vorllegen kann, lässt sich diese nicht unmittelbar als Härter kategorisleren. Der Begriff des Zwelkomponenten-Lacksystems bezieht sich somit ausschlleßllch auf das vorhandenseln der Komponenten (a) und (b).

Als Komponente (a) können eln oder mehrere Polyisocyanate eingesetzt werden, die Jeweils mindestens zwel, bevorzugt drei Isocyanat-Funktionalltäten aufweisen.

Beispiele für Polyisocyanate (a) mit zwei Isocyenat-Funktionalltäten sind Tetramethylen-1,4-dlisocynat, Hexamethylen-1,6-diisocyanat, 2,2,4-Trimethylhexamethylen-1,6-diisocyanat, ω,ω'-Dipropyl-äther-diisocyanat, Cyclohexyl-1,4-dilsocyanat, Cyclohexyl-1,3-dilsocyanat, Cyclohexyl-1,2-diisocyanat, Dicyclohexylmethan-4,4'-dilsocyanat, 1,5Dimethyl-2,4-di(Isocyanato-methyl)-benzol, 1,5-DI-methyl-2,4-dl(isocyanatoethyl)-benzol, 1,3,5-Trimethyl-2,4-di(isocyanatomethyl)-benzol, 1,3,5-Triethyl-2,4-di(isocyanatomethyl)-benzol, Isophorondiisocyanat, Dicyclohexyldimethylmethan-4,4'-diisocyanat, m-Tetramethylxylylendiisocyanat, 2,4-Toluylendiisocyanat, 2,6-Toluylendiisocyanat und Diphenylmethan-4,4'-dilsocyanat.

Weitere Beispiele für Polylsocyanate (a) mit zwei oder mehr Isoeyanat-Funktionalitäten sind Triisocyanate wie Nonantrüsocyanat (NTI) sowie Polyisocyanate (a) auf der Basis der vorstehend beschriebenen Diisocyanate und Triisocyanate (a), insbesondere Oligomere, die Isocyanurat-, Biuret-, Allophanat-, Iminooxadiazindion-, Urethan-, Carbodiimid-, Harnstoff- und/oder Uretdiongruppen enthalten und vorteilhafterweise eine NCO-Funktionalität von 2 bis 5, vorzugsweise von 2,2 bis 4,0, insbesondere von 2,5 bis 3,8 haben. Einsetzbar sind auch teilblockierte Polyisocyanate mit mindestens zwei freien Isocyanatfunktionalitäten.

Besonders bevorzugt werden als Komponente (a) Alkylendüsocyanate wie Hexamethylen-1,6-diisocyanat und die korrespondierenden oligomerisierten Diisocyanate, ganz besonders bevorzugt die daraus gebildeten trimerisierten Diisocyanate (Isocyanurate) eingesetzt.

Komponente (b) besteht aus einer oder mehreren mit Komponente (a) reaktiven, oligomeren oder polymeren Verbindungen.

Als "oligomer" im Sinne der Komponente (b) werden hierin solche Verbindungen verstanden, die aus 3 bis 10 Monomereinheiten aufgebaut sind. "Polymer" sind hingegen solche Verbindungen, die aus mindestens 11 Monomereinheiten aufgebaut sind. Im Rahmen der erfindungsgemäßen Zusammensetzungen werden die oligomeren Verbindungen als Vernetzungsmittel (bzw. Vernetzer) und die polymeren Verbindungen als Bindemittel bezeichnet.

Die Komponente (b) ist reaktiv gegenüber den Isocyanatgruppen der Komponente (a). Dies erreicht Komponente (b) durch gegenüber Isocyanat reaktive Gruppen wie beispielsweise Hydroxylgruppen oder Thiolgruppen. Bevorzugt trägt die Komponente (b) mindestens zwei, besser mindestens drei oder mindestens vier derartige Gruppen. Besonders bevorzugt unter den gegenüber Isocyanat reaktiven Gruppen sind die Hydroxylgruppen.

Als Komponente (b) werden bevorzugt hydroxyfunktionelle Vernetzungs- oder Bindemittel auf Polyester- und/oder Poly(meth)acrylat-Basis eingesetzt. Der Ausdruck "(Meth)acrylat" umfasst hierbei sowohl Acrylate als auch Methacrylate und der Ausdruck "(Meth)acrylsäure" umfasst die Acrylsäure wie auch die Methacrylsäure.

Werden als Komponente (b) hydroxyfunktionelle Vernetzung- oder Bindemittel eingesetzt, so weisen diese bevorzugt eine OH-Zahl auf, die eine gute Vernetzung mit der Polyisocyanat-Komponente und damit eine ausreichende Härte im resultierenden Lack gewährleistet. Besonders bevorzugt weisen die Polyester-und/oder Poly(meth)acrylat-Bindemittel oder -Vernetzungsmittel eine OH-Zahl zwischen 50 und 300, insbesondere zwischen 100 und 250 und besonders bevorzugt 150 bis 250 mg KOH/g der Komponente (b) auf. Die Hydroxylzahl (OH-Zahl) gibt an wieviel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).

Vorzugsweise besitzen die Verbindungen der Komponente (b) eine Säurezahl bis etwa 30, besonders bevorzugt 2 bis 18 g KOH/g der Verbindung der Komponente (b). Die Säurezahl gibt hierbei die Anzahl der mg Kaliumhydroxyid an, die zur Neutralisation von 1 g der jeweiligen Verbindung der Komponente (b) verbraucht wird (DIN EN ISO 2114).

Als Komponente (b) eignen sich besonders bevorzugt Hydroxylgruppen tragende Vernetzungs- oder Bindemittel mit vorzugsweise mindestens zwei, besonders bevorzugt mindestens drei und insbesondere mindestens vier Hydroxylgruppen pro Molekül. Die Vernetzungs- oder Bindemittel können primäre und/oder sekundäre Hydroxylgruppen tragen, wobei solche mit primären Hydroxylgruppen und nur gegebenenfalls zusätzlichen sekundären Hydroxylgruppen bevorzugt sind. Unter den Hydroxylgruppen tragenden Vernetzungs- oder Bindemitteln sind insbesondere Hydroxylgruppen tragende Polyester (b1) und Hydroxylgruppen tragende Poly(meth)acrylate (b2) bevorzugt.

Als Hydroxylgruppen tragende Polyester (b1) zur Herstellung der erfindungsgemässen Zweikomponenten-Lacksysteme sind insbesondere solche geeigent, die ein zahlenmittleres Molekulargewicht Mn zwischen 500 und 30000 g/mol, bevorzugt zwischen 1000 und 10000 g/mol und besonders bevorzugt zwischen 1000 und 5000 g/mol, jeweils gemessen mittels Gelpermeationschromatographie (GPC) gegen einen Polystyrolstandard, besitzen.

Bevorzugt werden Polyester eingesetzt, die erhältlich sind durch Umsetzung von
m1) Di- und/oder Polycarbonsäuren oder deren veresterungsfähigen Derivaten, gegebenenfalls zusammen mit Monocarbonsäuren,
m2) Polyolen, gegebenenfalls zusammen mit Monoolen, und
m3) gegebenenfalls weiteren modifizierenden Komponenten.

Besonders bevorzugt werden dabei Polyester eingesetzt, die ohne Verwendung von Monoolen und Monocarbonsäuren hergestellt worden sind.

Als Beispiele für Polycarbonsäuren, die als Komponente (m1) eingesetzt werden können, seien aromatische, aliphatische und cycloaliphatische Polycarbonsäuren genannt. Bevorzugt werden als Komponente (m1) aromatische und/oder aliphatische Polycarbonsäuren eingesetzt.

Beispiele für geeignete Polycarbonsäuren sind Phthalsäure, Isophthalsäure, Terephthalsäure, Halogenphthalsäuren, wie Tetrachlor- und Tetrabromphthalsäure, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure, Cyclobutantetracarbonsäure und andere. Die cycloaliphatischen Polycarbonsäuren können sowohl in ihrer cis- als auch in ihrer transForm sowie als Gemisch beider Formen eingesetzt werden. Geeignet sind auch die veresterungsfähigen Derivate der obengenannten Polycarbonsäuren, wie beispielsweise deren ein- oder mehrwertige Ester mit aliphatischen Alkoholen mit 1 bis 4 Kohlenstoffatomen oder Hydroxyalkoholen mit 1 bis 4 Kohlenstoffatomen. Ausserdem können beispielsweise auch die Anhydride der obengenannten Säuren eingesetzt werden.

Beispiele für Monocarbonsäuren, die gegebenenfalls zusammen mit den Polycarbonsäuren eingesetzt werden können, sind Benzoesäure, tert.-Butylbenzoesäure, Laurinsäure, Isononansäure und hydrierte Fettsäuren natürlich vorkommender Öle.

Zu den Polyolen (m2) zählen Diole sowie Polyole mit drei und mehr Hydroxylgruppen.

Geeignete Diole (m2) zur Herstellung des Hydroxylgruppen tragenden Polyesters (b1) sind beispielsweise Ethylenglykol, Propandiole, Butandiole, Hexandiole, Hydroxypivalinsäureneopentylglykolester, Neopentylglykol, Diethylenglykol, Cyclohexandiol, Cyclohexandimethanol, Trimethylpentandiol und Ethylbutylpropandiol. Ferner sind auch aliphatische Polyetherdiole, wie lineare oder verzweigte Poly(oxyethylen)glykole, Poly(oxypropylen)glykole und/oder Poly(oxybutylen)glykole und gemischte Polyetherdiole wie Poly(oxyethylenoxypropylen)glykole geeignet. Die Polyetherdiole haben üblicherweise eine zahlenmittlere Molmasse Mn von 400 bis 3000 g/mol, die sich mittels GPC gegen einen Polystyrolstandard bestimmen lässt.

Ferner können als Diole auch aromatische oder alkylaromatische Diole eingesetzt werden, wie beispielsweise 2-Alkyl-2-phenyl-propan-1,3-diol oder Bisphenol-Derivate mit Etherfunktionalität.

Als weitere Diole sind auch Ester von Hydroxycarbonsäuren mit Diolen geeignet, wobei als Diol die voranstehend genannten Diole eingesetzt werden können.

Beispiele für Hydroxycarbonsäuren sind Hydroxypivalinsäure oder Dimethylolpropansäure.

Beispiele für Polyole mit mindestens drei Hydroxylgruppen sind Ditrimethylolpropan, Trimethylolethan, Trimethylolpropan, Glycerin, Pentaerythrit, Homopentaerythrit, Dipentaerythrit, Trishydroxyethylisocyanat, 1,2,4-Butantriol, Propan- und Hexan-Triole, Trihydroxycarbonsäuren, wie Trishydroxymethyl(ethyl)ethansäuren. Die Polyole mit mindestens 3 OH-Gruppen können allein oder als Gemisch eingesetzt werden. Gegebenenfalls können die Triole zusammen mit einwertigen Alkoholen, wie beispielsweise Butanol, Octanol, Laurylalkohol, Cyclohexanol, tert.-Butylcyclohexanol, ethoxylierten bzw. propoxylierten Phenolen eingesetzt werden.

Als Komponente (m3) zur Herstellung der Hydroxylgruppen tragenden Polyester (b1) geeignet sind insbesondere Verbindungen, die eine gegenüber den funktionellen Gruppen des Polyesters reaktive Gruppe aufweisen. Als modifizierende Komponente (m3) können Diepoxidverbindungen, gegebenenfalls auch Monoepoxidverbindungen verwendet werden. Geeignete Komponenten (m3) sind beispielsweise in der DE-A-40 24 204 auf Seite 4, Zeilen 4 bis 9, beschrieben.

Die Herstellung der Hydroxylgruppen tragenden Polyester (b1) erfolgt nach den bekannten Methoden der Veresterung, wie dies beispielsweise in der DE-A-40 24 204, Seite 4, Zeilen 50 bis 65, beschrieben ist.

Die Umsetzung erfolgt dabei üblicherweise bei Temperaturen zwischen 180 und 280 °C, gegebenenfalls in Gegenwart eines geeigneten Veresterungskatalysators, wie beispielsweise Lithiumoctoat, Dibutylzinnoxid, Dibutylzinndilaurat, para-Toluolsulfonsäure und ähnlichen.

Üblicherweise wird die Herstellung der Hydroxylgruppen tragenden Polyester (b1) in Gegenwart geringer Mengen eines geeigneten Lösungsmittels als Schleppmittel durchgeführt. Als Schleppmittel werden beispielsweise aromatische Kohlenwasserstoffe, wie insbesondere Xylol und (cyclo)aliphatische Kohlenwasserstoffe, z. B. Cyclohexan, eingesetzt. Daneben ist es aber auch möglich, die Polyester lösemittelfrei (Umsetzung in Masse) herzustellen.

Bevorzugt besitzen die als Komponente (b2) eingesetzten Hydroxylgruppen tragenden (Meth)acrylatcopolymerisate zahlenmittlere Molekulargewichte zwischen 1000 und 30000 g/mol, bevorzugt zwischen 1000 und 15000 g/mol, jeweils gemessen mit GPC gegen einen Polystyrolstandard.

Als Hydroxylgruppen und gegebenenfalls Säuregruppen enthaltendes (Meth)acrylatcopolymerisat (b2) sind alle (Meth)acrylatcopolymerisate mit den angegebenen OH-Zahlen, Säurezahlen und Molekulargewichten geeignet.

Bevorzugt werden als Komponente (b2) (Meth)acrylatcopolymerisate eingesetzt, die durch Polymerisation ethylenisch ungesättigter Monomere in einem organischen Lösemittel oder einem Lösemittelgemisch und in Gegenwart mindestens eines Polymerisationsinitiators erhältlich sind.

Die zur Polymerisation eingesetzten ethylenisch ungesättigten Monomere beziehungsweise deren Mischungen müssen Hydroxylgruppen tragende Monomere in einem solchen Maße umfassen, dass die resultierenden Oligomere oder Polymere im Mittel mindestens zwei, besser mindestens drei und besonders bevorzugt mindestens vier Hydroxylgruppen tragen.

Zur Herstellung der erfindungsgemäß eingesetzten hydroxyfunktionellen Poly(meth)acrylatharze können unter anderem Ester der (Meth)acrylsäure oder ein Gemisch aus solchen (Meth)acrylsäureestern eingesetzt werden. Als Beispiele werden Alkyl(meth)acrylate mit bis zu 20 Kohlenstoffatomen im Alkylrest, wie z. B. Methyl-, Ethyl-, Propyl-, Butyl-, Hexyl, Ethylhexyl-, Stearyl- und Laurylacrylat und -methacrylat und cycloaliphatische (Meth)acrylsäureester, wie z. B. Cyclohexyl(meth)acrylat, Isobornyl(meth)acrylat, Dicyclopentaen(meth)acrylat und tert.-Butylcyclohexyl(meth)acrylat genannt. Es können jedoch auch Ethyltriglykol(meth)acrylat und Methoxyoligoglykol(meth)acrylat mit einem zahlenmittleren Molekulargewicht Mn von vorzugsweise 400 bis 700 g/mol oder andere ethoxylierte und/oder propoxylierte hydroxylgruppenfreie (Meth)acrylsäurederivate eingesetzt werden.

Als ethylenisch ungesättigte Monomere, die mindestens eine Hydroxylgruppe pro Molekül tragen können beispielsweise primäre und/oder sekundäre Hydroxylgruppen enthaltende Hydroxyalkylester der Acrylsäure, Methacrylsäure oder einer anderen α,β-ethylenisch ungesättigten Carbonsäure genannt werden. Diese Ester können sich von einem Alkylenglykol ableiten, das mit der Säure verestert ist, oder sie können durch Umsetzung der Säure mit einem Alkylenoxid erhalten werden. Als Hydroxylgruppen tragende ethylenisch ungesättigte Monomere werden vorzugsweise Hydroxyalkylester der Acrylsäure oder Methacrylsäure, in denen die Hydroxyalkylgruppe bis zu 20 vorzugsweise bis zu 10 und besonders bevorzugt bis zu 6 Kohlenstoffatome enthält eingesetzt.

Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat, 4-Hydroxybutylmethacrylat, Hydroxystearylacrylat und Hydroxystearylmethacrylat genannt. Entsprechende Ester anderer ungesättigter Säuren, wie z. B. Ethacrylsäure, Crotonsäure und ähnlichen Säuren mit bis zu etwa 6 Kohlenstoffatomen pro Molekül, können ebenfalls eingesetzt werden.

Ferner können als ethylenisch ungesättigte Monomere auch olefinisch ungesättigte Polyole wie beispielsweise Trimethylolpropanmonoallylether eingesetzt werden.

Als ethylenisch ungesättigte mit den anderen Monomeren copolymerisierbare Monomere können auch Säuregruppe tragende Monomere, vorzugsweise eine Carboxylgruppe pro Molekül tragende Monomere eingesetzt werden. Darunter werden besonders bevorzugt Acrylsäure und/oder Methacrylsäure eingesetzt. Es können aber auch andere ethylenisch ungesättigte Carbonsäuren mit vorzugsweise bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.

Weitere geeignete copolymerisierbare ethylenisch ungesättigte Monomere für den Einbau in die Hydroxylgruppen tragenden Poly(meth)acrylate, sind beispielsweise vinylaromatische Kohlenwasserstoffe, wie Styrol, α-Alkylstyrole und Vinyltoluol.

Die Herstellung der erfindungsgemäß eingesetzten Hydroxylgruppen tragenden Poly(meth)acrylate (b2) erfolgt vorzugsweise in einem organischen Lösemittel oder Lösemittelgemisch und in Gegenwart mindestens eines Polymerisationsinitiators. Als organische Lösemittel und Polymerisationsinitiatoren werden die für die Herstellung von Polyacrylatharzen üblichen Lösemittel und Polymerisationsinitiatoren eingesetzt. Als Beispiele für brauchbare Lösemittel werden Pentylacetat, Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykol-monomethylether, Diethylenglykolmonoethylether, Diethylenglykoldiethylether, Diethylenglykolmonobutylether, Trimethylolpropan, 2-Hydroxypropionsäureethylester und 3-Methyl-3-methoxybutanol sowie Derivate auf Basis von Propylenglykol, z. B. Ethylethoxypropionat, Isopropoxypropanol, Methoxypropylacetat und ähnliche, genannt.

Als Beispiele für brauchbare Polymerisationsinitiatoren werden freie Radikale bildende Initiatoren, wie z. B. tert.-Butylperoxy-2-ethylhexanoat (TBPEH), Benzoylperoxid. Azobisisobutyronitril und tert.-Butylperbenzoat genannt. Die Initiatoren werden bevorzugt in einer Menge von 2 bis 25 Gew.-%, besonders bevorzugt von 4 bis 15 Gew.-%, bezogen auf das Gesamtgewicht der Monomeren, eingesetzt.

Die Polymerisation wird zweckmässigerweise bei einer Temperatur von 80 bis 160 °C, vorzugsweise 110 bis 160 °C, durchgeführt. Bevorzugt werden als Lösemittel Pentylacetat. n-Butanol, Ethoxyethylpropionat und Isopropoxypropanol eingesetzt.

Bevorzugt werden die Monomeren zur Herstellung der hydroxyfunktionellen Poly(meth)acrylate (b2) in einer solchen Konzentration polymerisiert, dass die entstehenden Polyacrylatharzlösungen einen Festkörpergehalt von bevorzugt 80 bis 60 Gew.-% aufweisen. Verläuft die Polymerisation bei höheren Verdünnungsgraden so wird vorzugsweise durch Abdampfen von Lösungsmitteln der obige Festkörpergehalt eingestellt.

Während die aus dem Stand der Technik bekannten Zweikomponenten-Lacksysteme häufig Aminogruppen enthaltende oligomere oder polymere Verbindungen, beispielsweise als Vernetzungs- oder Bindemittel enthalten, sind diese in den erfindungsgemäßen Zusammensetzungen nur in untergeordneten Mengen einzusetzen. Werden daher als Komponente (b) auch oligomere oder polymere Verbindungen eingesetzt, die gegenüber Isocyanat reaktive Aminogruppen enthalten, so sind diese Verbindungen bezogen auf das Gesamtgewicht der Komponente (b) zu höchstens 15 Gew.-%, vorzugsweise höchstens 10 Gew.-%, besonders bevorzugt zu höchstens 5 Gew.-% und ganz besonders bevorzugt zu höchstens 3 Gew.-% enthalten. Wird insbesondere auf eine verlängerte Topfzeit der Zweikomponenten-Lackzusammensetzung Wert gelegt, so enthält die Zusammensetzung bezogen auf das Gesamtgewicht der Komponente (b) höchstens 3 Gew.-%, besonders bevorzugt höchstens 2 oder 1 Gew.-% und ganz besonders bevorzugt keine Aminogruppen enthaltenden oligomeren oder polymeren Verbindungen, die über ihre Aminogruppen zur Reaktion mit Isocyanatgruppen befähigt sind. Unter den Begriff Aminogruppen" zählen auch substituierte Aminogruppen, die beispielsweise N-Hydroxyalkyl- oder N-Alkoxyalkyl-Gruppen tragen.

Als Komponente (c) werden die Phosphonsäurediester und Diphosphonsäurediester vorzugsweise aus der Gruppe, bestehend aus acyclischen Phosphonsäurediestem, cyclischen Phosphonsäurediestem, acyclischen Diphosphonsäurediestern und cyclischen Diphosphonsäurediestem, ausgewählt.

Bevorzugt besitzen die acyclischen Phosphonsäurediester (c) die allgemeine Formel (I):

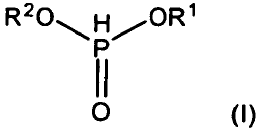

In der allgemeinen Formel (I) sind die Reste R¹ und R² gleich oder voneinander verschieden; vorzugsweise sind sie gleich.

Die Reste R¹ und R² werden aus der Gruppe, bestehend aus:
- geradkettigem oder verzweigtem Alkyl- mit 1 bis 12, vorzugsweise 1 bis 8 und insbesondere 1 bis 4 Kohlenstoffatomen, Cycloalkyl- mit 3 bis 8, vorzugsweise 3 bis 6 Kohlenstoffatomen und Aryl- mit 5 bis 10, vorzugsweise 6 bis 10 Kohlenstoffatomen und
- Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl- und Cycloalkylarylalkyl-, wobei die hierin enthalten Alkyl-, Cycloalkyl- und Arylgruppen jeweils die vorstehend aufgeführte Anzahl von Kohlenstoffatomen enthalten
   gewählt.

Die Reste R¹ und R² können substituiert oder unsubstituiert sein und insbesondere ein Heteroatom, ausgewählt aus der Gruppe, bestehend aus Sauerstoff, Schwefel, Stickstoff, Phosphor und Silizium, vorzugsweise Sauerstoff, Schwefel und Stickstoff, enthalten.

Die bevorzugten cyclischen Phosphonsäurediester (c) lassen sich ebenfalls von Formel (I) ableiten. Bei den cyclischen Phosphonsäurediestern sind jedoch die Reste R¹ und R² als zweiwertige Reste aufzufassen und über eine kovalente Bindung zwischen einem Atom des Rests R¹ und einem Atom des Rests R² oder eine zweibindige, verknüpfende Gruppe, ausgewählt aus der Gruppe, bestehend aus einem Sauerstoffatom, einem substituierten, insbesondere mit Sauerstoff substituierten oder unsubstituiertem Schwefelatom, einem substituierten, insbesondere mit Alkyl substitiuierten, Stickstoffatom, einem substituierten, insbesondere mit Sauerstoff substituierten, Phosphoratom und einem substituierten, insbesondere mit Alkyl und Alkoxy substituierten Siliziumatom verknüpft.

Die bevorzugten acyclischen Diphosphonsäurediester (c) besitzen die allgemeine Formel (II): 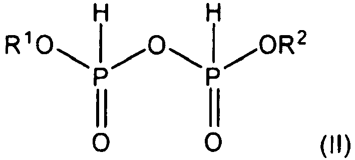 worin die Reste R¹ und R² die gleiche Bedeutung wie in Formel (I) besitzen.

Die bevorzugten cycilschen Diphosphonsäurediester (c) leiten sich analog den cyclischen Phosphonsäuredlestern von den acyclischen Diphosphonsäurediestern ab, wobei die Reste R¹ und R² wie für die Phosphonsäurediester beschrieben miteinander verbunden sind.

Als Substituenten für die Reste R¹ und R² und die Im Falle der cylischen Verbindungen vorhandene zweibindige, verknüpfende Gruppe kommen alle Gruppen und Atome In Betracht, die die Wirkung der Phosphonsäurediester und der Diphosphonsäurediester (c) nicht beeinträchtigen, die Härtungsreaktionen In den erfindungsgernäßen Gemischen nicht inhibieren und nicht zu unerwünschten Nebenreaktionen führen. Beispiele geeigneter Substituenten sind Halogenatome, Nitrilgtuppen oder Nitrogruppen, bevorzugt Halogenatome, insbesondere Fluoratome, Chloratome und Bromatome.

Vorzugsweise sind die Reste R¹ und R² unsubstltuiert,

Bevorzugt werden die Reste R¹ und R² aus der Gruppe, bestehend aus Phenyl, Methyl und Ethyl, ausgewählt. Besonders bevorzugt wird Methyl oder Phenyl verwendet.

Bevorzugt werden die acyclischen Phosphonsäurediester (c) der allgemeinen Formel (I) oder die acyclischen Diphosphonsäurediester (c) der allgemeinen Formel (II) verwendet. Hlerunter sind insbesondere die Dialkylphosphonate und Diarylphosphonate bevorzugt.

Besonders bevorzugt werden die Reste R¹ und R² der acyclischen Phosphonsäuredlester (c) der allgemeinen Formel (I) aus der Gruppe, bestehend aus Phenyl, Methyl und Ethyl, ausgewählt. Insbesondere wird Methyl oder Phenyl verwendet.

Ein Beispiel für einen ganzen besonders gut geeigneten Phoaphonsäurediester (c) der allgemeinen Formel (I) ist Dimethylphosphonat, das manchmal von der Fachwelt (nicht ganz korrekt) auch als Dimethylphosphit bezeichnet wird. Unter den Diarylphosphonaten Ist besonders das Diphenylphosphonat bevorzugt.

Erfindungsgemäβ wird die Komponente (c) In einem Gewichtsanteil von 1 bis 25 Gew.-%, besonders bevorzugt In einem Anteil von 1 bis 15 Ges.-%, ganz besonders bevorzugt 2 bis 10 Ges.-% bezogen auf das Gewicht der Komponente (b), eingesetzt.

Die Zweikomponenten-Lackzusammensetzung können neben den zwingende Komponenten (a), (b) und (c) erfindungsgemäß weitere Komponenten (d) enthalten, die sich von den Komponenten (a), (b) und (c) unterscheiden. Die Summe der Komponenten (a), (b), (c) und (d) bildet hierbei das erfindungsgemäße Zweikomponenten-Lacksystem. Derartige Komponenten sind beispielsweise lackübliche Additive und Zusätze wie UV-Stabiiisatoren, Füllstoffe, Entschäumer, Emulgatoren, Netzmittel. Haftvermittler, Photoinitiatoren, Radikalfänger, Verlaufmittel, Rheologiehilfsmittel und Lichtschutzmittel. Zu den Komponenten (d) gehören Jedoch beispielsweise auch Lösungsmittel oder Pigmente. Die Komponente (d) kann Jedoch auch Vemetzer, Bindemittel und/oder katalytisch wirkende Zusätze enthalten, solange diese nicht unter eine der Definitionen der Komponenten (a), (b) oder (c) fallen. Vorzugsweise Ist Komponente (d) jedoch kein Vernetzungs- oder Bindemittel, Die Additive und Zusätze (d) können breit varitert werden und werden In dem Fachmann bekannten wirksamen Mengen zugesetzt. Zu der Komponente (d) zählen schließlich auch die Verbindungen, die herstellungsbedingt In den Komponenten (a), (b) und (c) enthalten sind, jedoch nicht unter die Definitionen der Komponenten (a), (b) und (c) fallen, wie beispielsweise Katalysatoren zur Herstellung der entsprechenden Komponenten.

Überraschend wurde gefunden, dass erfindungegemäß eine Verbesserung der Kompatibilität der Komponenten und damit gleichzeitig eine Verbesserung der optischen Eigenschaften der resultierenden Lackschicht unabhänglg von einem Zusammenwirken mit aminogruppenhaltigen isocyanatreaktiven Vernetzungs- oder Bindemitteln erzielt werden kann. Insbesondere war überraschend, dass die Vernetzungs- beziehungsweise Bindemittelkomponente (b) frei von gegenüber Isocyanat reaktiven Aminogruppen sein kann und trotzdem die Aufgaben der vorliegenden Erfindung gelöst werden. Im Übrigen ist es nicht notwendig, dass die erfindungsgemäßen Zwelkamponenten-Lacksysteme selbstkondensierbare Vernetzungs- oder Bindemittel wie beispielsweise Silylgruppen tragende Vernetzungs- oder Bindemittel enthalten. Vorzugsweise enthalten die erfindungsgemäßen Zweikomponenten-Lacksysteme weniger als 15 Gew.-%, besonders bevorzugt weniger als 10 Gew.-% und ganz besonders bevorzugt weniger als 5 Gew.-% an selbstvernetzenden, insbesondere über Silylgruppen selbstvernetzenden Vernetzungs- oder Bindemitteln. Bevorzugte erfindungsgemäße Zweikomponenten-Lacksysteme enthalten keine selbstvernetzenden Vernetzungs-oder Bindemittel.

Nach bisheriger Kenntnis der Erfinder kann die zugesetzte Phosphonat-Komponente (c) mit Feuchtigkeit reagieren und damit Nebenreaktionen der Polyisocyanate beispielsweise mit Kondenswasser zurückdrängen, die eine unerwünschte Gelbildung hervorrufen. Andererseits können die Phosphonate über die Phosphor-Wasserstoff-Bindung an die Polyisocyanate addieren oder mit diesen komplexieren, ohne als Vernetzungsmittel zu agieren. Die so gebildeten Addukte oder Komplexe können auf diese Weise einerseits die Reaktivität der freien Polyisocyanate derart positiv beeinflussen, dass eine erhöhte Topfzeit der Zweikomponentenlacke erzielt werden kann. Andererseits können die Addukte oder Komplexe aus Phosphonat und Polyisocyanat eine verbesserte Kompatibilität gegenüber der Komponente (b) bewirken. Auf diese Weise ist selbst der Einsatz hochpolarer, hochreaktiver, stark vernetzender hydroxyfunktioneller Vernetzungs- und/oder Bindemittel (b) möglich, ohne dass es zu unerwünschten Trübungen im flüssigen oder gehärteten Lacksystem kommt oder sich die Topfzeiten stark verkürzen.

Weiterhin kann eine Verbesserung der Mikroindentations-Härte der erfindungsgemäß resultierenden Lackschichten insbesondere in auf eine mögliche Umesterungsreaktion der Phosphonate bei erhöhten Temperaturen zurückgeführt werden, in der hydrolysierte Phosphonate mit den als Komponente (b) eingesetzten hydroxyfunktionellen Vernetzungsmitteln oder Bindemitteln in einer Vernetzungsreaktion reagieren.

Als Lösemittel zur Verdünnung der erfindungsgemäßen Zweikomponenten-Lacksysteme werden bevorzugt aromatische und/oder estergruppenhaltige, nichtprotische Lösemittel verwendet.

Die vorliegende Erfindung betrifft darüber hinaus ein Verfahren zur Herstellung des erfindungsgemäßen Zweikomponenten-Lacksystems, durch den Schritt des homogenen Vermischens der Komponenten (a), (b) und (c), wobei in Schritt (A) eine Vormischung (V1) aus den Komponenten (b) und (c) und gegebenenfalls der Komponente (d) oder eines Teils der Komponente (d) hergestellt wird und In Schritt (B) diese Vormischung V1 mit der Komponente (a) oder einer Vormischung (V2) aus Komponente (a) und gegebenenfalls der Komponente (d) oder eines Teils der Komponente (d), vermischt wird.

In der Praxis liegt Komponente (b) herstellungsbedingt bereits häufig gelöst oder dispergiert In einem organischen Lösungsmittel oder Lösungsmitteigenlisch gegebenenfalls neben anderen Zusätzen vor. Mit anderen Worten liegt Komponente (b) häufig bereits vorvermischt mit Additiven oder anderen Zusätzen, d. h. Verbindungen der Komponente (d) vor.

Auch Komponente (a) liegt häufig In organischen Lösungsmittein, die somit unter die Definition der Komponente (d) fallen vor. Entsprechendes gilt auch für Komponente (c).

Alternatly zu obigem Vorgehen kann auch die Komponente (a) vorvermischt mit Komponente (c) und gegebenenfalls Komponente (d) oder einem Tell der Komponente (d) vorliegen und anschließend mit einer Mischung aus Komponente (b) und gegebenenfalls Komponente (d) oder einem Tell der Komponente (d) vermischt werden.

Nachteillg ist es im allgemeinen die Komponenten (a) und (b) in Abwesenheit der Komponente (c) zu vermischen, da dann der positive Elnfluss auf die Topfzeit und Kompatibilltätserhöhung zwischen Komponente (a) und (b) bis zum Zeltpunkt der Zumlschung der Komponente (c) nicht gegeben ist.

Vor der Applikation werden die Komponenten wie vorstehend angegeben zunächst Innig vermischt, wobei sich das Mischungsverhältnis der Komponenten (a) und (b) aus dem Gehalt an gegenüber Isocyanatgruppen reaktiven Gruppen der Komponente (b) und dem Gehalt an Isocyanatgruppen in Komponente (a) unter Berücksichtigung der gewünschten Stöchlornetrie ergibt. Erfindungsgemäß beträgt das bevorzugt eingesetzte Molverhältnis isocyanatreaktiver Gruppen, insbesondere Hydroxylgruppen zu Isocyanatgruppen 1 : 0,8 bis 1 : 1,5, besonders bevorzugt 1 : 0,9 bis1: 1,3.

Gegenstand der Erfindung Ist auch die Verwendung der erfindungsgemaßen Zweikomponenten-Lacksysterne als Klariack, Insbesondere In der Automobil-Mehrschichdackierung.

Das erfindungsgemäß hergestellte Zweikomponenten-Lacksystem kann nach bekannten Verfahren wie Spritzen, Tauchen, Walzen oder Rakeln aufgetragen werden. Dabei kann das zu beschichtende Substrat bereits mit welteren Lackschichten, Insbesondere mit den entsprechenden Lackschichten einer 3-Schicht- oder 4-Schlcht-Automobil-Mehrschichtlackierung, versehen sein. Besonders geeignet ist das erfindungsgemäße Zweikomponenten-Lacksystem als Klarlack, wobei es Im so genannten Nass-In-Nass-Verfahren auf eine Basislackschicht aufgetragen wird, und anschließend beide Lackschichten gemeinsam gehärtet werden.

Die Aushärtung des erfindungsgemäßen Zweikomponenten-Lacksystems kann durch Temperaturerhöhung beschleunigt werden. Sie erfolgt bevorzugt im Bereich von 50°C bis 170°C, besonders bevorzugt im Bereich von 80°C bis 150°C.

Die resultierende Schichtdicke der auf diese Weise entstandenen Klarlackschicht beträgt bevorzugt zwischen 20 µm und 60 µm, besonders bevorzugt zwischen 25 µm und 45 µm.

Die erfindungsgemäßen Beschichtungszusammensetzungen können beispielsweise zur Erzeugung von Klarlackschichten in der Fahrzeugindustrie, zur Herstellung von Reparaturlacken oder als Decklacke eingesetzt werden.

Die folgenden Beispiele erläutern die Erfindung, ohne diese zu beschränken.

### BEISPIELE

### Herstellungsbeispiel 1 (Hydoxyl-funktionalisiertes Acrylharzes A1)

Ein Reaktionsgefäß wurde mit einem Kühler versehen und mit Stickstoff beschickt. 720,86 Gewichtsteile Pentylacetat wurden vorgelegt und unter Rühren auf 135°C erhitzt.

Es werden zwei Zugabemischungen hergestellt. Mischung 1 besteht aus 483,13 Gewichtsteilen Ethylhexylmethacrylat, 260,7 Gewichtsteilen Styrol und 789,9 Gewichtsteilen 4-Hydroxylbutylacrylat.

Mischung 2 besteht aus 92,02 Gewichtsteilen Pentylacetat und 153,4 Gewichtsteilen tert-But yl per oxy-2-ethyl hexanoat (TBPEH).

Nachdem die vorgelegte Reaktionsmischung auf 135°C erwärmt wurde, wurde die Mischung 2 langsam über einen Zeitraum von 285 Minuten hinzugegeben. 15 Minuten nach Beginn der Zugabe von Mischung 2, wurde mit der Zugabe von Mischung 1 begonnen. Mischung 1 wurde langsam und gleichmäßig über einen Zeitraum von 240 Minuten zugesetzt. Nach der vollständigen Zugabe von Mischung 2 wurde die Reaktionsmischung zur Nachpolymerisation 120 Minuten bei 135°C gerührt.

Der feste Anteil des Produktes betrug 65,8 %, die Säurezahl betrug 2,3 mg KOH/g (bezogen auf das feste Produkt) und die Viskosität betrug 18 d Pa s (bei 23°C). Die Hydroxylzahl betrug 200 g KOH/g.

### Herstellungsbeispiel 2 (Hydoxyl-funktionalisiertes Acrylharzes A2)

Ein Reaktionsgefäß wurde mit einem Kühler versehen und mit Stickstoff beschickt. 720.86 Gewichtsteile Pentylacetat wurden vorgelegt und unter Rühren auf 135°C erhitzt.

Es werden zwei Zugabemischungen hergestellt. Mischung 1 besteht aus 498,5 Gewichtsteilen Ethylhexylmethacrylat, 283,7 Gewichtsteilen Styrol, 728,53 Gewichtsteilen 4-Hydroxylbutylacrylat und 23,01 Gewichtsteil Acrylsäure.

### Mischung 2 besteht aus 92,02 Gewichtsteilen Pentylacetat und 153,4 Gewichtsteilen TBPEH.

Nachdem die vorgelegte Reaktionsmischung auf 135°C erwärmt wurde, wurde die Mischung 2 langsam über einen Zeitraum von 285 Minuten hinzugegeben. 15 Minuten nach Beginn der Zugabe von Mischung 2, wurde mit der Zugabe von Mischung 1 begonnen. Mischung 1 wurde langsam und gleichmäßig über einen Zeitraum von 240 Minuten zugesetzt. Nach der vollständigen Zugabe von Mischung 2 wurde die Reaktionsmischung zur Nachpolymerisation 120 Minuten bei 135°C gerührt.

Der feste Anteil des Produktes betrug 65,7 %, die Säurezahl betrug 11,6 mg KOH/g (bezogen auf das feste Produkt) und die Viskosität betrug 15 d Pa s (bei 23°C). Die Hydroxylzahl betrug 185 g KOH/g.

### Herstellungsbeispiel 3 (Hydoxyl-funktionalisiertes Acrylharzes A3)

Ein Reaktionsgefäß wurde mit einem Kühler versehen und mit Stickstoff beschickt. 720,86 Gewichtsteile Pentylacetat wurden vorgelegt und unter Rühren auf 135°C erhitzt.

Es werden zwei Zugabemischungen hergestellt. Mischung 1 besteht aus 368,10 Gewichtsteilen Ethylhexylmethacrylat, 460,12 Gewichtsteilen Styrol, 452,45 Gewichtsteilen 2-Hydroxyethylmethylacrylat, 230,06 Gewichtsteilen 4-Hydroxylbutylacrylat und 23,01 Gewichtsteil Acrylsäure.

### Mischung 2 besteht aus 92,02 Gewichtsteilen Pentylacetat und 153,4 Gewichtstellen TBPEH.

Nachdem die vorgelegte Reaktionsmischung auf 136°C erwärmt wurde, wurde die Mischung 2 langsam über einen Zeitraum von 285 Minuten hinzugegeben. 15 Minuten nach Beginn der Zugabe von Mischung 2, wurde mit der Zugabe von Mischung 1 begonnen. Mischung 1 wurde langsam und gleichmäßig über einen Zeitraum von 240 Minuten zugesetzt. Nach der vollständigen Zugabe von Mischung 2 wurde die Reaktionsmischung zur Nachpolymerisation 120 Minuten bei 135°C gerührt.

Der feste Anteil des Produktes betrug 68,2 %, die Säurezahl betrug 14,02 mg KOH/g (bezogen auf das feste Produkt) und die Viskosität betrug 6,8 d Pa s (bei 23°C). Die Hydroxylzahl betrug 186 g KOH/g.

### Beispiel 1 (klarlack ohne Zusatz von Dimethylphosphonat) und Beispiele 2-4 (erfindungsgemäßer Klarlack mit unterschiedlichen Mengen von Dimethylphosphonat)- Mikrolndentations-Härte

Die Gewichtsteile der Rohmaterialien für die Farben in Tabelle 1 wurden nacheinander zusammengegeben und homogenisiert um die Basiszusammensetzung herzustellen.

**Tabelle 1**

| Rohmaterial | Versuch Nr. 1 | Versuch Nr.2 | Versuch Nr.3 | Versuch Nr. 4 |
|---|---|---|---|---|
| Acrylharz A 1 aus Herstellungsbeispiel 1 | 81,23 | 81,23 | 81,23 | 81,23 |
| Butanol | 1,54 | 1,54 | 1,54 | 1,54 |
| Glykolsäure-n-butylester | 4,76 | 4,76 | 4,76 | 4,76 |
| 1-Methoxy-2-propylacetat | 8,01 | 8,01 | 8,01 | 8,01 |
| Pentylacetat | 9,61 | 9,61 | 9,61 | 9,61 |
| Butyldiglycolacetat | 4,95 | 4,95 | 4,95 | 4,95 |
| Ethoxyproplyacetat | 2,43 | 2,43 | 2,43 | 2,43 |
| Xylol | 1,35 | 1,35 | 1,35 | 1,35 |
| Dimethylphosphonat | 0 | 1,19 | 2,39 | 4,77 |
| Byk 331 | 0,09 | 0,09 | 0,09 | 0,09 |
| Byk ES-80 | 0,19 | 0,19 | 0.19 | 0,19 |
| Tinuvin 292 | 0,93 | 0,93 | 0,93 | 0,93 |
| Tinuvin 384 | 1,12 | 1,12 | 1,12 | 1,12 |

Byk 331 ist ein silikonbasiertes Oberflächenadditiv der Firma Byk Chemie, Byk ES-80 ist ein Additiv zur Erhöhung der Leitfähigkeit elektrostatisch verspritzbarer Lacke der Firma Byk Chemie, Tinuvin 292 und Tinuvin 384 sind speziell für Lacke entwickelte Lichtstabilisatoren der Firma Ciba Spezialitätenchemie

Als Härter wurde das auf Hexamethylendiisocyanat basierende Polyisocyanat Basonat HI 190 (beziehbar von der BASF AG) verwendet. Die im Folgenden aufgeführten Gewichtsteile des Härters wurden zu jeweils 100 Gewichtsteilen der in Tabelle 1 aufgeführten Basiszusammensetzungen zugefügt:
Versuch Nr. 1: 38,5
Versuch Nr. 2: 38,1
Versuch Nr. 3: 37,7
Versuch Nr. 4: 37,2

Die Zweikomponenten-Klarlacke aus den experimentellen Beispielen 1 bis 4 wurden auf Testpanels aufgetragen. Jedes dieser Panels wurde beschichtet mit einem normalen, bekannten, kathodisch abgeschiedenen, thermisch gehärteten Elektrolack, einem konventionellen, bekannten, thermisch gehärteten Primer-Lackierung und einer Schicht eines kommerziell erhältlichen, lösungsmittelbasierten, silbernen oder schwarzen Basislacks der BASF Coatings AG, und 10 Minuten bei 80°C vorgetrocknet. Die Schicht des Basislacks und die Schicht des Klariacks wurden gemeinsam bei 140° für 22 Minuten getrocknet. Der resultierende Basislack hatte eine Schichtdicke von 7,5 µm und der Klariack eine Schichtdicke von 40 µm.

Die Untersuchung der resultierenden Testpanels bezüglich der Mikroindentations-Härte belegt den positiven Einfluss des Dimethylphosphonates auf die Mikroindentations-Härte des entstandenen Films. Zusätzlich konnte visuell eine erhebliche Verbesserung des Aussehens festgestellt werden.

**Tabelle 2**

| | Mikroindentations-Härte [N/mm2] | Ausgehen (visuelle Beurtellung) |
|---|---|---|
| Versuch Nr. 1 | 60 | unebene Oberfläche, Orange-Peel |
| Versuch Nr. 2 | 72 | gut, sehr viel weniger Orange-Peel als im Versuch 1 |
| Versuch Nr. 3 | 73 | gut, sehr viel weniger Orange-Peel als im Versuch 1 |
| Versuch Nr. 4 | 79 | gut, sehr viel weniger Orange-Peel als im Versuch 1 |

Eine eindeutige Verbesserung der Mikroindentations-Härte (bestimmt nach ASTM E 384 (1999)) konnte beobachtet werden.

### Beispiel 5 (klarlack ohne Zusatz von Dimethylphosphonat) und Beispiele 6-7 (erfindungsgemäßer Klarlack mit unterschiedlichen Mengen von Dimethylphosphonat)- Verlängerung der Topfzeit

Die Gewichtsteile Rohmaterialien für die Lacke gemäß Tabelle 3 wurden nacheinander zusammengegeben und homogenislert, um die Basiszusammensetzung herzustellen.

**Tabelle 3**

| Rohmaterial | Versuch Nr. 5 | Versuch Nr. 6 | Versuch Nr. 7 |
|---|---|---|---|
| Acrylharz A 2 aus Herstellungsbeispiel 2 | 53,39 | 53,39 | 53,39 |
| Acrylharz A 3 aus Herstellungsbeispiel 3 | 16,99 | 16,99 | 16,99 |
| Butanol | 1,30 | 1,30 | 1,30 |
| Glykolsäure-n-Butylester | 4,03 | 4,03 | 4,03 |
| 1-Methoxy-2-propylacetat | 6,78 | 6,78 | 6,78 |
| Pentylacetat | 8,14 | 8,14 | 8,14 |
| Butyldiglycolacetat | 4,19 | 4,19 | 4,19 |
| Ethoxyproplyacetat | 2,05 | 2,05 | 2,05 |
| Xylol | 1,15 | 1,15 | 1,15 |
| Dimethylphosphonat | 0 | 6 | 12 |
| Byk 331 | 0,08 | 0,08 | 0,08 |
| Byk ES-80 | 0,16 | 0,16 | 0,16 |
| Tinuvin 292 | 0,79 | 0,79 | 0,79 |
| Tinuvin 384 | 0,95 | 0,95 | 0,95 |

Byk 331 ist ein silikonbasiertes Oberflächenadditiv der Firma Byk Chemie, Byk ES-80 ist ein Additiv zur Erhöhung der Leitfähigkeit elektrostatisch verspritzbarer Lacke der Firma Byk Chemie, Tinuvin 292 und Tinuvin 384 sind speziell für Lacke entwickelte Lichtstabilisatoren der Firma Ciba Spezialitätenchemie.

Als Härter wurde das auf Hexamethylendiisocyanat basierende Polyisocyanat Basonat HI 190 (beziehbar von der BASF AG) verwendet. Die im Folgenden aufgeführten Gewichtsteile des Härters wurden zu jeweils 100 Gewichtsteilen der in Tabelle 1 aufgeführten Basiszusammensetzungen zugefügt:
Versuch Nr. 5: 36
Versuch Nr. 6: 34
Versuch Nr. 7: 32

Die visuelle Überprüfung der resultierenden Testflächen auf das Aussehen hin zeigte den positiven Einfluss, der sich durch Dimethylphosphonat auf die Oberflächenglätte des entstandenen Films ergibt (Tabelle 4). Die Topfzeit wurde ebenfalls bestimmt (Tabelle 4). Hier wurde ein noch viel ausgeprägterer positiver Einfluss durch das Dimethylphosphonat hervorgerufen.

**Tabelle 4**

| | Aussehen, visuelle Inspektion | Topfzeit des erfindungsgemäßen Zweikomponenten-Lacksystems [Minuten] |
|---|---|---|
| Versuch Nr. 5 | unebene Oberfläche, Orange-Peel | 270 |
| Versuch Nr. 6 | besser als Versuch Nr.5, immer noch Orange-Peel | 420 |
| Versuch Nr. 7 | hervorragender Verlauf glatte Oberfläche | über 480 |

Die Topfzeit wurde in einem geschlossenen Behälter ermittelt. Eine Mischung der Basiszusammensetzungen und des Härteres wurden beobachtet, während der Behälter in regelmäßigen Intervallen von 30 Minuten bewegt wurde, bis die Mischung nicht mehr flüssig war.

## Patentansprüche

1. Zwelkomponenten-Lacksystem, umfassend
als Komponente (a) ein oder mehrere Polylsocyanate,
als Komponente (b) eine oder mehrere mit Komponente (a) reaktive, ollgomere und/oder polymere Verbindungen und
als Komponente (c) ein oder mehrere Phosphonate ausgewählt aus der Gruppe der Phosphonsäurediester und Diphosphonsäurediester,
wobei
(I) Komponente (b) alle im Zweikomponenten-Lacksystem enthaltenen mit Komponente (a) reaktiven, oligomeren und/oder polymeren Verbindungen enthält,
(II) Komponente (b) höchstens 15 Gew.-% bezogen auf das Gesamtgewicht der Komponente (b) an oligomeren und/oder polymeren Verbindungen enthält, die gegenüber Isocyanat reaktive Aminogruppen tragen und
(III) Komponente (c) In einem Gewichtsantell von 1 bis 25 Gew.-%, bezogen auf das Gewicht der Komponente (b), enthalten ist.

2. Zweikomponenten-Lacksystem nach Anspruch 1, **dadurch gekennzeichnet, dass** Komponente (c) ausgewählt Ist aus der Gruppe der Dialkylphosphonate und der Diarylphosphonate.

3. Zweikomponenten-Lacksystem nach Anspruch 1 oder 2, **dadurch gekennzeichnet, dass** Komponente (c) ausgewählt Ist aus der Gruppe bestehend aus Dimethylphosphonat, Diethylphosphonat und Dlphenylphosphonat.

4. Zweikomponenten-Lacksystem nach einem der Ansprüche 1 bis 3, **dadurch gekennzeichnet, dass** die Komponente (c) in einem Anteil von 1 bis 15 Gew.-%, bezogen auf das Gewicht der Komponente (b), enthalten ist.

5. Zweikomponenten-Lacksystem nach einem der Ansprüche 1 bis 4, **dadurch gekennzeichnet, dass** Komponente (b) ein mindestens zwei Hydroxylgruppen tragender Polyester oder ein mindestens zwei Hydroxylgruppen tragendes Poly(meth)acrylat ist.

6. Zweikomponenten-Lacksystem nach Anspruch 5, **dadurch gekennzeichnet, dass** die Hydroxylzahl der Komponente (b) zwischen 100 und 250 mg KOH pro Gramm der Komponente (b) beträgt.

7. Zweikomponenten-Lacksystem nach einem der Ansprüche 1 bis 6, **dadurch gekennzeichnet, dass** Komponente (b) höchstens 5 Gew.-%, vorzugsweise höchstens 3 Gew.-% bezogen auf das Gesamtgewicht der Komponente (b) an oligomeren oder polymeren Verbindungen enthält, die gegenüber Isocyanat reaktive Aminogruppen tragen.

8. Zweikomponenten-Lacksystem nach einem der Ansprüche 1 bis 7, **dadurch gekennzeichnet, dass** Komponente (a) ein Diisocyanate oder ein Oligomeres eines Diisocyanats ist.

9. Zweikomponenten-Lacksystem nach Anspruch 8, **dadurch gekennzeichnet, dass** das Oligomere des Diisocyanats ein Isocyanurat oder Uretdion ist.

10. Verfahren zur Herstellung eines Zweikomponenten-Lacksystems nach einem der Ansprüche 1 bis 9, wobei die Komponenten (a), (b) und (c) homogen vermischt werden und in einem
Schritt (A) eine Vormischung (V1) aus den Komponenten (b) und (c) und gegebenenfalls der Komponente (d) oder eines Teils der Komponente (d) hergestellt wird und in einem
Schritt (B) die Vormischung V1 mit der Komponente (a) oder einer Vormischung (V2) aus Komponente (a) und gegebenenfalls der Komponente (d) oder eines Teils der Komponente (d), vermischt wird, wobei Komponente (d) aus einem Lösungsmittel und gegebenenfalls weiteren lacküblichen Additiven und Zusätzen besteht.

11. Verfahren zur Herstellung eines Zweikomponenten-Lacksystems nach Anspruch 10, wobei die Komponenten (a), (b) und/oder (c) mit Komponente (d) oder einem Teil der Komponente (d) vorgemischt eingesetzt werden.

12. Verwendung eines Zweikomponenten-Lacksystems nach einem der Ansprüche 1 bis 9 als Klarlack, vorzugsweise als Klariack einer Automobil-Mehrschichtlacklerung.

## Claims

1. Two-component coating system comprising as component (a) one or more polyisocyanates,
as component (b) one or more oligomeric and/or polymeric compounds that are reactive with component (a), and
as component (c) one or more phosphonates selected from the group of phosphonic diesters and diphosphonic diesters,
where
(I) component (b) comprises all oligomeric and/or polymeric compounds that are present in the two-component coating system and are reactive with component (a),
(II) component (b) contains not more than 15% by weight, based on the total weight of component (b), of oligomeric and/or polymeric compounds which carry isocyanate-reactive amino groups and
(III) component (c) is present in a weight fraction of 1% to 25% by weight, based on the weight of component (b).

2. Two-component coating system according to Claim 1, **characterized in that** component (c) is selected from the group of dialkyl phosphonates and diaryl phosphonates.

3. Two-component coating system according to Claim 1 or 2, **characterized in that** component (c) is selected from the group consisting of dimethyl phosphonate, diethyl phosphonate, and diphenyl phosphonate.

4. Two-component coating system according to any one of Claims 1 to 3, **characterized in that** component (c) is present in a fraction of 1% to 15% by weight, based on the weight of component (b).

5. Two-component coating system according to any one of Claims 1 to 4, **characterized in that** component (b) is a polyester which carries at least two hydroxyl groups or a poly(meth)acrylate which carries at least two hydroxyl groups.

6. Two-component coating system according to Claim 5, **characterized in that** the hydroxyl number of component (b) is between 100 and 250 mg of KOH per gram of component (b).

7. Two-component coating system according to any one of Claims 1 to 6, **characterized in that** component (b) contains not more than 5% by weight, preferably not more than 3% by weight, based on the total weight of component (b), of oligomeric or polymeric compounds which carry isocyanate-reactive amino groups.

8. Two-component coating system according to any one of Claims 1 to 7, **characterized in that** component (a) is a diisocyanate or an oligomer of a diisocyanate.

9. Two-component coating system according to Claim 8, **characterized in that** the oligomer of the diisocyanate is an isocyanurate or uretdione.

10. Process for preparing a two-component coating system according to any one of Claims 1 to 9, which comprises homogeneously mixing components (a), (b), and (c) and in a
step (A) preparing a premix (V1) of components (b) and (c) and, where appropriate, component (d) or part of component (d), and in a
step (B) mixing the premix V1 with component (a) or with a premix (V2) of component (a) and, where appropriate, component (d) or a part of component (d) where component (d) is composed of a solvent and, where appropriate, further, typical coatings additives and adjuvants.

11. Process for preparing a two-component coating system according to Claim 10, where components (a), (b) and/or (c) are used in the form of a premix with component (d) or part of component (d).

12. Use of a two-component coating system according to any one of Claims 1 to 9 as a clearcoat, preferably as the clearcoat of a multicoat automobile finish.

## Revendications

1. Système de laque bicomposant, comprenant :
en tant que composant (a) un ou plusieurs polyisocyanates,
en tant que composant (b) un ou plusieurs composés oligomères et/ou polymères réactifs avec le composant (a), et
en tant que composant (c) un ou plusieurs phosphonates choisis dans le groupe des diesters de l'acide phosphonique et des diesters de l'acide diphosphonique,
(I) le composant (b) contenant tous les composés oligomères et/ou polymères réactifs avec le composant (a) contenus dans le système de laque bicomposant,
(II) le composant (b) contenant au plus 15 % en poids, par rapport au poids total du composant (b), de composés oligomères et/ou polymères qui portent des groupes amino réactifs avec les isocyanates, et
(III) le composant (c) étant contenu en une proportion en poids de 1 à 25 % en poids, par rapport au poids du composant (b).

2. Système de laque bicomposant selon la revendication 1, **caractérisé en ce que** le composant (c) est choisi dans le groupe des phosphonates de dialkyle et des phosphonates de diaryle.

3. Système de laque bicomposant selon la revendication 1 ou 2, **caractérisé en ce que** le composant (c) est choisi dans le groupe constitué par le phosphonate de diméthyle, le phosphonate de diéthyle et le phosphonate de diphényle.

4. Système de laque bicomposant selon l'une quelconque des revendications 1 à 3, **caractérisé en ce que** le composant (c) est contenu en une proportion de 1 à 15 % en poids par rapport au poids du composant (b).

5. Système de laque bicomposant selon l'une quelconque des revendications 1 à 4, **caractérisé en ce que** le composant (b) est un polyester portant au moins deux groupes hydroxyles ou un poly(méth)acrylate portant au moins deux groupes hydroxyle.

6. Système de laque bicomposant selon la revendication 5, **caractérisé en ce que** l'indice hydroxyle du composant (b) est compris entre 100 et 250 mg KOH par gramme du composant (b).

7. Système de laque bicomposant selon l'une quelconque des revendications 1 à 6, **caractérisé en ce que** le composant (b) contient au plus 5 % en poids, de préférence au plus 3 % en poids, par rapport au poids total du composant (b), de composés oligomères ou polymères qui portent des groupes amino réactifs avec les isocyanates.

8. Système de laque bicomposant selon l'une quelconque des revendications 1 à 7, **caractérisé en ce que** le composant (a) est un diisocyanate ou un oligomère d'un diisocyanate.

9. Système de laque bicomposant selon la revendication 8, **caractérisé en ce que** l'oligomère du diisocyanate est une isocyanurate ou une uretdione.

10. Procédé de fabrication d'un système de laque bicomposant selon l'une quelconque des revendications 1 à 9, dans lequel les composants (a), (b) et (c) sont mélangés de manière homogène, et
lors d'une étape (A), un prémélange (V1) des composants (b) et (c) et éventuellement du composant (d) ou d'une partie du composant (d) est fabriqué, et
lors d'une étape (B), le prémélange V1 est mélangé avec le composant (a) ou un prémélange (V2) du composant (a) et éventuellement du composant (d) ou d'une partie du composant (d), le composant (d) étant constitué d'un solvant et éventuellement d'autres additifs et ajouts usuels pour les laques.

11. Procédé de fabrication d'un système de laque bicomposant selon la revendication 10, dans lequel les composants (a), (b) et/ou (c) sont utilisés prémélangés avec le composant (d) ou une partie du composant (d).

12. Utilisation d'un système de laque bicomposant selon l'une quelconque des revendications 1 à 9 en tant que laque transparente, de préférence en tant que laque transparente d'un laquage multicouche automobile.
